# EUROPEAN PATENT APPLICATION

(11) **EP 4 524 551 A1**
(43) Date of publication of application: **19.03.2025**
(21) Application number: 24460027.6
(22) Date of filing: 05.09.2024
(51) Int. Cl.: G01N 21/45, G01N 21/77, G01N 21/64, G02B 6/02, G02B 6/00

(54) **METHOD OF MODIFYING OPTICAL PROBES AND OPTICAL PROBE MODIFIED WITH DIAMOND PARTICLES WITH COLOURED NITROGEN CENTRES**

(30) Priority: 15.09.2023 PL 44610623
(71) Applicant: Politechnika Gdanska, 80-233 Gdansk (PL)
(72) Inventor: JANIK, Monika, Wroclaw 53-621 (PL); GLOWACKI, Maciej, Gdansk 80-367 (PL); FICEK, Mateusz, Gdansk 80-180 (PL); SKIBA, Franciszek, Gdynia 81-601 (PL); BOGDANOWICZ, Robert, Gdansk 80-287 (PL)
(74) Representative: Pawlowska-Bajerska, Justyna

(57) **Abstract**

The optical probe modified with diamond particles with NV-DP nitrogen colour centres is characterized in the fact that the bonding of the NV-DP particles to the probe surface is by van der Waals electrostatic interaction, and the surface is evenly covered with a suspension of NV-DP particles of powder size to particle size from 5 to 500 nm at a concentration from 0.01 to 1 mg/mL, preferably 5-500 nm at a concentration of 0.1 to 1 mg/mL, and the thickness of the NV-DP particle layer is from 5 to 500 nm. The invention also refers to method of obtaining modified optical probe.

## Description

The invention refers to method for modifying the surface of optical probes by diamond particles with coloured nitrogen centres (NV-DP) as well as optical probes - sondes obtained by this method. The invention is for use in medicine, medical and biotechnological diagnostics (*in vitro* or *in vivo* diagnostics), chemical industry (e.g. quality analysis of chemical products), or environmental monitoring (e.g. detection of toxic compounds in water tanks).

Diamond, thanks to its unique crystal structure, has unique properties, both physical and chemical. Moreover, these properties can be modified by introducing dopants or defects into the crystal lattice of the diamond. There are many ways to modify diamond particles using various means. Depending on the type of dopant/defect in diamond particles, several parameters such as optical properties and morphology are changed [1]. One of the possible defects occurring in diamonds is colour centres. It is a defect in the crystal lattice capable of absorbing and emitting light. In most cases, it involves replacing a carbon atom with an atom of another element in various configurations. The nitrogen colour centre - nitrogen-vacancy (NV) - is particularly noteworthy.

The inventors of the invention, having many years of both scientific and practical experience in provision, construction, optimisation of measurement probes - probe is for measuring, especially for diagnostic, medical, analytical and environmental use, as well as in the modification and independent use of diamond particles, focused practical scientific work on the possibility of optimising the optical parameters of the used optical probes with diamond particles comprising NV colour centre (NV-DP). The inventors noted that NVs stand out from other diamond colour centres due to their stable single-photon emission with high quantum efficiency at room temperature and unique spin properties. As a result, diamond particles with coloured NV-DP nitrogen centres have been used as imaging probes for long-term tracking and imaging of both *in vitro* or *in vivo* cells/tissues [2], as well as magnetic [3] or temperature nanosensors [2,4]. In addition to using diamond particles as independent detectors or markers, they can also be used to modify or optimise the performance of other sensors, such as various optical probes, including fibre optics.

During the experimental studies, the inventors noted that the selected modifications of surface involving NV-DP can increase the sensitivity to the external refractive index but also to the growth of a layer on the sensor surface, so-called surface sensitivity, which is extremely important in biosensor applications. Moreover, due to the properties of the nitrogen colour centre, these modifications can lead to the creation of multidomain optical sensors combining the signal from the probe with the fluorescent signal from the NV-DP.

Previous, known methods of modifying the surface of optical probes using NV-DP diamonds were mainly based on modifying the probe with single NV-DP particles. Such known sensor structures of this type have found limited use in the measurement of magnetic fields [5,6] or temperatures [7]. It is worth noting, however, that the modified optical probe obtained in this study was used solely to excite and receive the signal obtained from the colour centre. In most of these cases, the optical probes did not show a characteristic optical response before modification with diamond particles, which prevented their independent functionality as sensors whose properties could be optimised.

### Cited state of the art

1. A. Itsh'Ak, O. Klonsky, Y. Gelbstein, and P. Beker, "Doping type influence on physical diamond properties," Mater. Res. Express 9(2), (2022).
2. W. W. Hsiao, Y. Y. Hui, P. Tsai, and H. Chang, "Fluorescent Nanodiamond: A Versatile Tool for Long-Term Cell Tracking , Super-Resolution Imaging , and Nanoscale Temperature Sensing," Acc. Chem. Res. 49, 400-407 (2016).
3. M. Tsukamoto, S. Ito, K. Ogawa, Y. Ashida, K. Sasaki, and K. Kobayashi, "Accurate magnetic field imaging using nanodiamond quantum sensors enhanced by machine learning," Sci. Rep. 12(1), 1-7 (2022).
4. Y. Wu, N. A. Alam, P. Balasubramanian, A. Ermakova, S. Fischer, H. Barth, M. Wagner, M. Raabe, F. Jelezko, and T. Weil, "Nanodiamond Theranostic for Light-Controlled Intracellular Heating and Nanoscale Temperature Sensing," Nano Lett. 21, 3780-3788 (2021).
5. Y. Chen, Q. Lin, H. Cheng, H. Huang, J. Shao, Y. Ye, G. S. Liu, L. Chen, Y. Luo, and Z. Chen, "Nanodiamond-Based Optical-Fiber Quantum Probe for Magnetic Field and Biological Sensing," ACS Sensors 7(12), 3660-3670 (2022).
6. I. V. F. Edotov, S. M. B. Lakley, E. E. S. Erebryannikov, P. H. Emmer, M. O. S. Cully, and A. M. Z. Heltikov, "High-resolution magnetic field imaging with a nitrogen-vacancy diamond sensor integrated with a photonic-crystal fiber," 41(3), 472-475 (2016).
7. C. Bian, W. Cao, M. Hu, Z. Chu, and R. Wang, "2-in-1 Dual-Fiber Probe Integrated with Nanodiamonds for Optical Thermometry Measurements," IEEE Photonics Technol. Lett. 33(23), 1321-1324 (2021).

The goal of the invention was to use NV-DP to provide and obtain an effective optimisation of the optical properties of the probes used - their sensitivity to the refractive index and surface sensitivity - but also to fully utilise the properties of the colour centre and combine both optical domains (the optical signal coming from the probe and the fluorescence signal coming from the NV centre) to create a comprehensive and multi-domain sensing structure. The aim od the invention was also to ensure that the provided method for modifying the surface of optical probes using NV-DP would have the following characteristics:
- Limitation or lack of limitation of the shape and size of the probe and the material from which it is made,
- No impact on the mechanical strength and stability of the probe,
- Homogeneous diamond particle coating, with controllable thickness of the layer formed by the diamond particles,
- No interference with the probe's primary optical signal,
- Limitation of or no requirement for qualified personnel or specialised equipment, and
- Enabling real-time optical performance control during surface modification.

The invention thus refers to method of modifying the surface of optical probes by diamond particles with coloured nitrogen centres (NV-DP). This modification is based in part on dipping/dip coating methods known in the art. The invention also involves modified optical probe using diamond particles with coloured nitrogen centres (NV-DP) regarding the optical properties of the produced probes, which are used in many practical uses - applications such as biomedicine (*in vitro* or *in vivo* diagnostics), chemical industry (e.g. quality analysis), or environmental monitoring (e.g. detection of toxic substances).

The invention relates to the use of NV-DP diamond powder suspensions for surface modification of known optical probes used for markerless optical measurements. The presented modification method enables uniform, stable coating of any optical probes. The properties, including the diamond layer thickness, are controlled by selecting the appropriate size/dimensions of the diamond particles, the concentration of the diamond suspension and the exposure time of the probe to the suspension. This modification is based on the immersion method, so-called dip-coating. The modification is preceded by the procedure of preparing diamond suspensions (Step 1). Next, the probe surface, regardless of the material used, is thoroughly cleaned (Step 2). Next, the dip coating process is performed (Step 3).

Step 1 of the invention includes the preparation of NV-DP diamond suspensions of NV-DP diamond powders suspended in a solvent. The preparation of the suspension involves dispersing the diamond powder or obtaining the powder with a particle size of 5 to 500 nm at a concentration of 0.01 to 1 mg/mL, preferably 5-500 nm at a concentration of 0.1 to 1 mg/mL, in a solvent such as water or water and buffer or buffer alone (e.g. deionised water, or phosphate buffer, which is very often the basic buffer used during biosensing), and then preferably homogenising the suspension using an ultrasonic washer and/or an ultrasonic homogeniser. Suspension homogenisation using an ultrasonic scrubber and/or ultrasonic homogeniser is applied to suspensions containing nanomaterials. The final suspension concentration and diamond particle size depend on the final application of the modified probe, the desired thickness of the additional diamond layer and the packing density of the diamond particles on the probe surface. For example, to obtain an optical probe whose surface sensitivity is to be optimised to be used for biodetection of selected biological targets, e.g. proteins, NV-DP powder with an average particle size of 5 to 250 nm is used at a concentration of 0.1 to 1 mg/mL so that the NV-DPs form a uniform layer on the probe surface. In contrast, to obtain a multi-domain probe, one that will combine its primary signal with the fluorescence signal from the NV-DPs, NV-DP powder with an average particle size of 140 to 500 nm is used at a concentration of 0.1 to 1 mg/mL so that the NV-DPs create a uniform layer on the probe surface and one that will have the highest possible content of NV centres.

Step 2, depending on the type of optical probe and the degree of its contamination, includes rinsing the probe with deionised water alternately with alcohol, e.g. isopropanol at a concentration of 80 to 99%, in at least 3 repetitions and drying the probe with an inert gas such as argon. Water is the most neutral and is safe for all optical probes regardless of their design, so washing begins with it and then alcohol washing is introduced. This type of cleaning is used to remove minor contamination. To remove larger contaminants, a dry etching procedure, also known as reactive plasma etching, is used. This is a well-known method using oxygen (O₂) plasma within 2 to 10 minutes depending on the construction of the modified optical probe. The less complex the probe design, the shorter the plasma etching time.

Step 3 includes immersing the optical probe prepared in Step 2 in a diamond suspension of the indicated NV-DP concentration prepared in Step 1. Depending on the desired end result, the probe is immersed in the suspension from 30 minutes to 12 hours. For example: to obtain an optical probe whose surface sensitivity will be increased for biodetection applications, the incubation time is from 30 minutes to 2 hours. In turn, to obtain a multi-domain probe, the incubation time is extended to up to 12 hours so that larger NV-DP particles have a chance to stably attach to the probe surface. This step leads to NV-DP binding to the probe surface by means of van der Waals electrostatic interaction. The NV-DP particle deposition process can be monitored in real time by changing the optical signal of the modified probes. Preferably, this step is carried out to obtain a layer thickness of NV-DP on the probe surface that approximates the size of the diamond particles in the applied suspension to obtain a single diamond layer. The thickness of the applied NV-DP modified layer ranges from 5 to 500 nm, which depends on the type of optical probe. After the deposition, the probe is gently washed with deionised water alternately with alcohol (e.g. isopropanol) in at least 3 repetitions (to wash away unbound diamond particles that may disturb the obtained signal or affect its stability in subsequent measurements) and dried with an inert gas (e.g. argon).

The invention also refers to optical probe for use in measurements in medicine, medical diagnostics, biotechnology, chemical industry (e.g. quality analysis of chemical products), environmental monitoring, where the probe is surface modified with diamond particles with coloured nitrogen centres (NV-DP), and the binding of NV-DP to the probe surface occurs by the van der Waals electrostatic interaction. The probe modified with NV-DP particles has increased surface sensitivity, i.e. sensitivity to layer growth on the surface of the sensor, which is crucial in the label-free detection biosensor applications. Modification of the probe surface using NV-DP can reduce the detection limits of selected biological and/or chemical targets, e.g. proteins with very low molecular weight, i.e. less than 30 kDa, by up to two orders of magnitude. In addition, due to the colour centres present in NV-DP molecules, the performance of the surface-modified probe can be extended by an additional optical domain, i.e. the fluorescence signal coming from the NV colour centre, thus creating a multi-domain optical sensor combining the optical signal originally coming from the probe with the fluorescence signal coming from the NV-DP. This, in turn, makes it possible to obtain two different sets of information about the detected target, which increases the probe's utility and reliability (both domains mutually verify the received signal).

The probe, or more precisely its surface, is modified by immersion in a suspension of NV-DP powder in either deionised water or phosphate buffer (the primary buffer used in biosensing) with particle sizes from 5 to 500 nm and concentrations from 0.01 to 1 mg/mL. The modification process is controlled by the incubation time of the probe in the NV-DP suspension, which can last from 30 minutes to 12 hours. The longer the incubation time of the probe in the suspension, the higher the density of NV-DP particles on the probe surface and the better the adhesion. The thickness of the applied NV-DP modified layer ranges from 5 to 500 nm, which depends on the type of optical probe. The thickness of the NV-DP layer on the surface of the probe with increased surface sensitivity designed for biosensing is between 5 and 250 nm (incubation time in this case is from 30 minutes to 2 hours), while for a dual-domain probe, it will be between 140 and 500 nm (recommended incubation time between 2 and 12 hours). In each of these cases, the NV-DP particles should evenly - steadily cover the entire active surface of the probe. Preferably, the probe surface is covered with a single diamond layer.

In summary, the optical probe according to the invention has a stable, uniform surface coverage by NV-DP particles.

The invention is described in more detail in the examples, and the drawing where Fig. 1 shows a schematic representation of an example optical probe based on a miniaturised Mach-Zehnder interferometer modified with NV-DP. Fig. 2 shows the effect of the NV-DP surface modification on the optical signal of the probe used. Fig. 3 shows images of the modified optical probe confirming the NV-DP modification. Fig. 4 shows results confirming the introduction of an additional optical domain using NV-DP.

The examples describe the same optical probe but with a different purpose and the use of different NV-DP parameters for surface modification.

### Example 1 Modification based on the example of a microcavity Mach-Zehnder interferometer - creation of a multi-domain sensor

A microcavity Mach-Zehnder interferometer (hereinafter referred to as a `probe' or 'microcavity') measuring 62.5 (depth marked as 'h') x 64 (diameter) µm was produced using femtosecond laser ablation in a standard Corning SMF28 single-mode optical fibre according to the methodology described in M. Janik, M. Koba, A. Celebańska, W.J. Bock, and M. Śmietana, 'Sensing properties of micro-cavity in-line Mach-Zehnder interferometer enhanced by reactive ion etching', Opt. Laser Technol. 103, 260-266 (2018). Corning SMF28 is a detailed specification of the optical fibre type:https://www.corning.com/media/worldwide/coc/documents/Fiber/PI-1463-AEN.pdf.

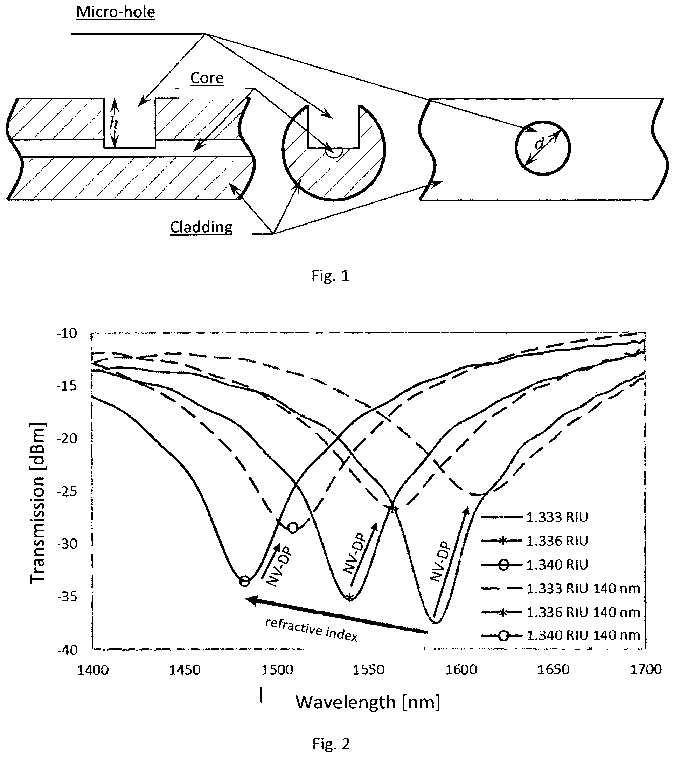

Fig. 1 shows a diagram of a hole made in an optical fibre. By removing part of the cladding and core of the optical fibre, a microcavity is created, which can then be characterised by its depth (marked as 'h' in Fig. 1) and the diameter (marked as 'd' in Fig. 1). The light propagated in the optical fibre core when encountering the micro cavity is divided into two parts. One propagates along the rest of the core (a beam called a reference arm), while the other propagates inside the fabricated cavity (a beam called a measurement arm). Interference occurs at the end of the made microcavity. Due to its design, both events that will take place in the entire volume of the microcavity (e.g. measurements of the liquid and its changing refractive index) and changes occurring only on its surface (e.g. modification of the microcavity surface) will influence the obtained interference signal.

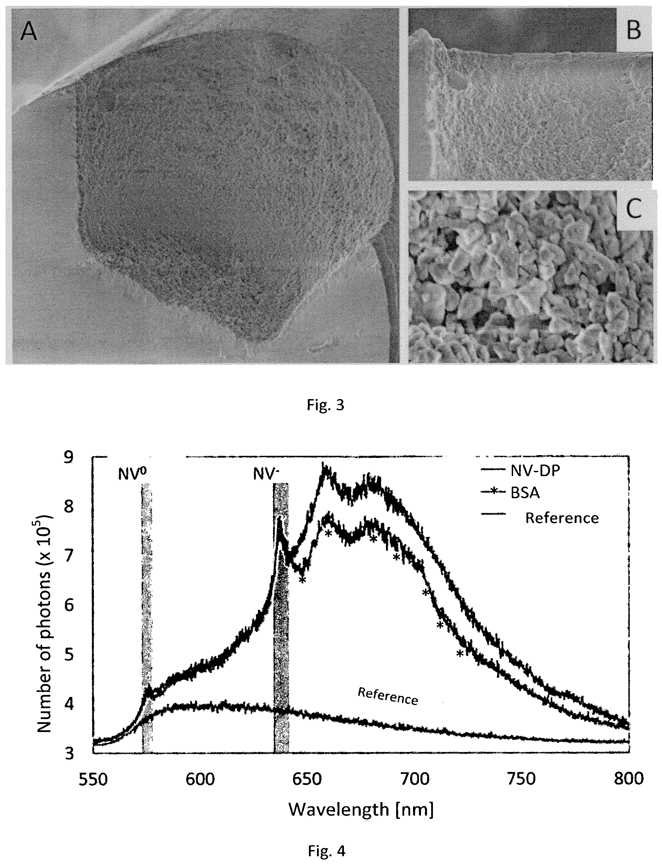

The constructed probe has been characterised in terms of sensitivity to the external refractive index. The measurements were performed by immersing the probe in mixtures of water and glycerine with increasing refractive indices ranging from 1.3333 to 1.3400 RIU. These measurements were performed using an NKT Photonics SuperK COMPACT broadband light source and a Yokogawa AQ6370D optical spectrum analyser. After characterisation, the probe was modified with NV-DP diamond particles using dip-coating. In the first step, the microcavity was washed with deionised water alternately with 99% isopropanol in 3 repetitions lasting 5 minutes and dried in an argon stream for 1 minute. After cleaning, the cavity was placed on a hydrophobic measuring surface - a hydrophobic coverslip made of borosilicate glass measuring 22x22 mm. Simultaneously, NV-DP particles (commercially available fluorescent carboxylated NV-DP particles from Adámas Nanotechnologies) with an average size of 140 nm were suspended in deionised water at a concentration of 0.1 mg/mL and homogenised using an ultrasonic scrubber. 50 µL of the prepared suspension was placed directly onto a cleaned microcavity placed on a coverslip and left in a closed measurement system for another 12 hours. After this time, the microcavity was thoroughly washed with deionised water alternately with 99% isopropanol in 3 repetitions lasting 5 minutes each to wash away unbound particles. Then, it was placed in a fresh batch of deionised water for 15 min to stabilise the created NV-DP layer. Then, reference measurements were performed again to determine the sensitivity of the microcavity to the refractive index of the liquid (the range from 1.3333 to 1.3400 RIU was investigated using the previously mentioned equipment and method). Suspension homogenisation using an ultrasonic scrubber and/or ultrasonic homogeniser is applied to suspensions containing nanomaterials. For reference liquids, it is not necessary to use these methods. The sensitivity to the refractive index both before and after modification was approximately 14,000 nm/RIU. Fig. 2 shows the interference minimum (interference signal obtained by the probe in use) and its changes for the selected refractive indices before (continuous lines) and after (dashed lines) the NV-DP modification. The arrow marked 'refractive index' indicates the direction of change resulting from an increasing refractive index. On the other hand, the arrows marked 'NV-DP' indicate the direction of changes after modification of the NV-DP probe surface. The diamond layer, with an estimated thickness of approximately 140 nm, significantly affected the operating point of the probe by changing the position of the interference minimum both in terms of the transmission level (depth of the traced minimum) and wavelength. The shift of the interference minimum towards longer wavelengths (indicated by arrows) confirms the attachment of NV-DP to the microcavity surface (changes/shifts of the interference minimum towards longer wavelengths mean the formation of an additional layer on the microcavity surface). Moreover, to confirm the diamond surface modification, the microcavity was imaged using a scanning electron microscope after modification with NV-DP particles (Fig. 3). The figure shows, consecutively: 3A photo of the probe cross-section after modification, 3B close-up of the modified probe wall, and 3C close-up of the NV-ND layer. The presented photos clearly demonstrate the successful surface modification and show a homogeneous layer produced using the methodology presented in this application.

Considering that the purpose of the modification was to introduce an additional optical domain based on fluorescence derived from NV-DP, Fig. 4 presents measurements of fluorescence derived from NV-DP located on the surface of the probe together with a reference signal. The reference signal represents the fluorescence measured from the top of the microcavity before surface modification with NV-DP. The probe that has been modified with NV-DP shows distinct local extrema at 575 and 637 nm, marked as NV⁰ and NV⁻, which accurately reflect the fluorescence of NV-rich diamonds. The signal marked with an asterisk was obtained when measuring the model protein - Bovine serum albumin (BSA) - on a modified NV-DP probe. The modified probe was immersed for 30 minutes in 50 µL of 0.1 mg/mL protein solution suspended in deionised water. After this time, the probe was washed with deionised water three times and the fluorescence measurement was repeated. Although the overall signal intensity decreased, the characteristic extrema are still clearly visible, which proves that such a modified probe can be used for biosensing without the risk of losing its sensing properties in the additional domain introduced by NV-DP. The fluorescence measurements shown in Fig. 4 were performed using the following measurement system: the fluorescence signal was excited with a 532 nm Nd:YAG SHG laser (Millenia, Spectra Physics), which was inserted into the optical fibre using a collimator. The laser power was 0.5 mW. The fluorescence signal was collected from above the microcavity in which NV-NDs were embedded using a microscope objective lens. A bandpass filter (OG570, Schott) was used in the detection path to eliminate laser radiation. Fluorescence was analysed using a 0.3 m monochromator (SR303i, Andor) equipped with a 600 line/mm grating and recorded using an iCCD detector (DH740, Andor).

### Example 2

### Modification based on the example of a microcavity Mach-Zehnder interferometer - increasing the surface sensitivity and lowering the detection limit of the model protein.

A microcavity Mach-Zehnder interferometer (hereinafter referred to as a `probe' or 'microcavity') measuring 62.5 (depth) x 64 (diameter) µm produced using femtosecond laser ablation in a standard Corning SMF28 single-mode optical fibre according to the methodology described in M. Janik, M. Koba, A. Celebańska, W.J. Bock, and M. Śmietana, 'Sensing properties of micro-cavity in-line Mach-Zehnder interferometer enhanced by reactive ion etching', Opt. Laser Technol. 103, 260-266 (2018). Corning SMF28 is a detailed specification of the optical fibre type: https://www.corning.com/media/worldwide/coc/documents/Fiber/PI-1463-AEN.pdf.

Fig. 1 shows a diagram of a hole made in an optical fibre. By removing part of the cladding and core of the optical fibre, a microcavity is created, which can then be characterised by its depth (marked as 'h' in Fig. 1) and the diameter (marked as 'd' in Fig. 1). The light propagated in the optical fibre core when encountering the micro cavity is divided into two parts. One propagates along the rest of the core (a beam called a reference arm), while the other propagates inside the fabricated cavity (a beam called a measurement arm). Interference occurs at the end of the made microcavity. Due to its design, both events that will take place in the entire volume of the microcavity (e.g. measurements of the liquid and its changing refractive index) and changes occurring only on its surface (e.g. modification of the microcavity surface) will influence the obtained interference signal.

The constructed probe has been characterised in terms of sensitivity to the external refractive index. The measurements were performed by immersing the probe in mixtures of water and glycerine with increasing refractive indices ranging from 1.3333 to 1.3400 RIU. These measurements were performed using an NKT Photonics SuperK COMPACT broadband light source and a Yokogawa AQ6370D optical spectrum analyser. After characterisation, the probe was modified with NV-DP diamond particles using dip-coating. In the first step, the microcavity was washed with deionised water alternately with 99% isopropanol in 3 repetitions lasting 5 minutes and dried in an argon stream for 1 minute. After cleaning, the cavity was placed on a hydrophobic measuring surface - a hydrophobic coverslip made of borosilicate glass measuring 22x22 mm. Simultaneously, NV-DP particles with an average size of 250 nm were suspended in phosphate buffered saline (PBS, pH = 7.4, SIGMA) at a concentration of 0.1 mg/mL and homogenised using an ultrasonic washer. The concentration is similar to Example 1 due to the same active surface area of the probe. 50 µL of the prepared suspension was placed directly onto a cleaned probe set on a coverslip and left in the closed measuring system for 30 minutes. After this time, the probe was thoroughly washed with deionised water alternately with 99% isopropanol for 5 minutes in 3 repetitions to wash away unbound particles. Then, it was placed in a fresh batch of PBS buffer for 15 min to stabilise the created NV-DP layer. Then, reference measurements were performed again to determine the sensitivity of the microcavity to the refractive index of the liquid (the range of refractive indices from 1.3333 to 1.3400 RIU was investigated using the previously mentioned equipment and method). The refractive index sensitivity before modification was 14,900 nm/RIU, while after NV-DP modification it was 15,300 nm/RIU. As in the previous example, the diamond layer significantly affected the operating point of the probe by changing the position of the interference minimum both in terms of transmission level (depth of the traced interference minimum) and wavelength. This time, the estimated thickness of the diamond layer ranged from 250 to 300 nm. Then, solutions of a model protein with a molecular size of 30 kDa were prepared with increasing concentrations of 0.35, 3.5, 35 and 35 µg/mL. The protein was suspended in PBS solution (the same buffer in which NV-DP was previously suspended). During the experiments, the sensor was immersed in 50 µL of protein solution of increasing concentration for 30 minutes. After each concentration, the probe was washed with PBS buffer for 1 minute and then measured in a new batch of PBS buffer to obtain a reference result. It should be noted that in addition to the potential increase in probe surface sensitivity, the NV-DP modification also offers a replacement for standard chemical modification, such as silanisation, by introducing different chemical/functional groups on the probe surface. In this study, carboxyl groups located on the surface of NV-DP were used, which allowed for direct attachment of the protein to the probe surface and thus investigating its surface sensitivity. The NV-DP-modified probe detected the lowest concentrations of the model protein, reaching the experimental detection limit of 350 ng/mL. In contrast, a probe without NV-DP modification was able to detect the protein at a concentration of 35 µg/mL, achieving a detection limit two orders of magnitude higher. The experimental work shows that the modification of the optical probe using NV-DP significantly improved the surface sensitivity of the used optical probe and resulted in a significant reduction of the detection limit of the model biological target by two orders of magnitude.

## Claims

1. Method of modifying optical probes by modifying surface of probe with diamond particles with coloured nitrogen centres (NV-DP), **characterized in** the method comprises the following steps:
- step of preparing of suspension of NV-DP powder by dispersing diamond powder to a particles size from 5 to 500 nm at a concentration from 0.01 to 1 mg/mL, preferably 5-500 nm at a concentration of 0.1 to 1 mg/mL, while the suspension is prepared in water and/or buffer,
- step of washing probe with deionised water alternately with alcohol at a concentration of 80 to 99% and drying;
- step of immersing the optical probe in the obtained diamond suspension for at least 30 minutes until the probe surface is steadily covered with NV-DP particles at thickness between 5 and 500 nm, and washing with deionised water alternately with alcohol in order to wash unbound diamond particles.

2. The method according to claim 1, wherein homogenisation of suspension of NV-DP powder in water and/or buffer is carried out using an ultrasonic washer and/or an ultrasonic homogeniser.

3. The method according to claim 1, wherein in order to obtain optical probe with surface sensitivity requires to be optimised for using the optical probe in biodetection of selected biological particles, NV-DP powder is used with an average particle size from 5 to 250 nm at a concentration from 0.1 to 1 mg/mL, while in order to obtain multi-domain probe, NV-DP powder is used with an average particle size from 140 to 500 nm at a concentration from 0.1 to 1 mg/mL.

4. Optical probe modified with diamond particles with coloured nitrogen centres (NV-DP) obtained by the method defined in claims 1-3, **characterized in that**, the bonding of NV-DP particles to the surface probe is by van der Waals electrostatic interaction, and the surface is steadily covered with suspension of NV-DP particles with powder amount to particle size from 5 to 500 nm at a concentration from 0.01 to 1 mg/mL, preferably 5-500 nm at a concentration of 0.1 to 1 mg/mL, while the thickness of NV-DP particle layer is from 5 to 500 nm.

5. The probe according to claim 4, wherein the thickness of NV-DP layer is from 5 to 250 nm in the case of a probe is used for biosensing and from 140 to 500 nm in the case of a two-domain probe.

6. The probe according to claim 4, wherein the probe surface is covered with a single diamond layer.
